## Europäisches Patentamt

## European Patent Office

## Office européen des brevets

(19)

(11) Veröffentlichungsnummer: **0 106 098**
**B1**

(12) # EUROPÄISCHE PATENTSCHRIFT

(45) Veröffentlichungstag der Patentschrift:
**12.08.87**

(21) Anmeldenummer: **83108682.2**

(22) Anmeldetag: **02.09.83**

(51) Int. Cl.⁴: **G 05 B 15/02**, G 06 F 15/46

(54) **Prozesssteuervorrichtung für Gerbereiverfahren.**

(30) Priorität: **09.09.82 CH 5371/82**

(43) Veröffentlichungstag der Anmeldung:
**25.04.84 Patentblatt 84/17**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
US-A-4 195 501

REGELUNGSTECHNISCHE PRAXIS, Band 24, Nr. 6, Juni 1982, Seiten 187-191, München (DE); TH.GIGER: "Mensch-Maschine-Kommunikation vollautomatisierter, diskontinuierlicher Prozesse" ADVANCES IN INSTRUMENTATION, Band 32, Teil 1, 1977, (Proc. of the I.S.A. Conf.and Exhibition, Niagara Falls, Oktober 1977), Instrument Society of America, Seiten 131-133, Pittsburgh, Pennsylvania (USA); R.A. TAYLOR: "A distributed microprocessor control philosophy" REGELUNGSTECHNISCHE PRAXIS, Band 24, Nr. 4, April 1982, Seiten 124-131, München (DE); "Aus den Unternehmen Systemporträt: Contronic P" REGELUNGSTECHNISCHE PRAXIS, Band 23, Nr. 3, März 1981, Seiten 89-96, München (DE); M.BROMBACHER: "INTERKAMA '80: Dezentrale

(73) Patentinhaber: **Hüni, Hans Eduard, Gehrenstrasse 16, CH- 8810 Horgen (CH)**

(72) Erfinder: **Hüni, Hans Eduard, Gehrenstrasse 16, CH-8810 Horgen (CH)**

(74) Vertreter: **Blum, Rudolf Emil Ernst, c/o E. Blum & Co Patentanwälte Vorderberg 11, CH- 8044 Zürich (CH)**

(56) Entgegenhaltungen: (Fortsetzung)
Prozessleitsysteme"
MACHINE DESIGN, Band 54, Nr. 11, Mai 1982, Seiten 105-107 + 110-115 + 122-127, Cleveland, Ohio (USA); "Section 3 machine and process control systems"

EP 0 106 098 B1

## Beschreibung

Die Erfindung betrifft eine Prozessteuervorrichtung mit mindestens einer Gruppe von Parallel zueinander betreibbaren Gerbgefässen, von denen mindestens ein Teil an gemeinsame Aqgregate angeschlossen sind, mit einem zentralen Rechner und einer zentralen Ein- und Ausgabeeinheit, wobei der Rechner mit Prozesssteuerschaltungen verbunden ist, von denen Jede einem Gerbgefäss bzw. einem gemeinsamen Agaregat zugeordnet ist und wobei ferner jedes Gerbgefäss bzw. jedes der gemeinsamen Aggregate von der zugehörigen Prozeßsteuerschaltung beeinflussbare, lokale Steuerorgane zur Betätigung der jeweiligen Funktionen besitzt sowie für Jede Gefässgruppe eine gemeinsame Eingabeeinheit zur Beeinflussung des Verfahrensablaufs in Jedem Gerbgefäss vorgesehen ist.

Weil Gerbereiverfahren, wozu so unterschiedliche Abläufe wie Aesch-, Gerb- sowie Färbverfahren gezählt werden, eine Abfolge von vielen unterschiedlichen Verfahrensschritten unter sich ändernden chemischen und physikalischen Bedingungen beinhalten, sind Bestrebungen zur Automatisierung dieser Abläufe bekannt. Diese stiessen insbesondere durch das Bestehen einer Vielzahl von unterschiedlich ausgerüsteten Gefässtypen bzw. Gerbfasstypen auf gewisse Grenzen.

Da Gerbereien mit unterschiedlichsten Gefässtypen ausgerüstet sein können, wobei die ausführbaren Funktionen von Gefäss zu Gefäss stark variiren, lässt sich die Automatisierung meist nicht vollständig vornehmen, so dass ein Zusammenspiel bestimmter manueller Eingriffe mit dem automatisierbaren Ablauf erforderlich wird. Dies auch deshalb, weil die individuellen Eigenschaften des jeweiligen Gerbgutes einer vollständigen Automatisierung entgegenstehen.

Weitere gerbereispezifische Hindernisse einer Automatisierung stellen die oft wechselnden Verfahrensrezepte dar, die jeweils der Aenderung der Bekleidungsmoden angepasst werden müssen. Damit verbunden ist das Erfordernis, je nach Bedarf eine grosse Anzahl unterschiedlicher chemischer Lösungen bereitzustellen und anzuwenden.

Während die lokale Steuerung des Verfahrensablaufs bei jedem Gerbgefäss einerseits aufwendig ist und andererseits dem Gesamtablauf zuwenig Rechnung tragen kann, haben sich zentrale Steuerungen als den jeweiligen Gegebenheiten zuwenig anpassbar und risikoreich erwiesen, da bei Ausfällen ein Grossteil des Betriebes lahmgelegt werden kann. Ein sinnvolles Zusammenwirken von Automatisation mit manuellen Eingriffsmöglichkeiten, was einerseits durch bestehende Gefässtypen bedingt, und andererseits für Notfälle erwünscht ist, war bisher nicht gegeben.

In der Veröffentlichung US-PS 4 195 501 ist eine Gerbereieinrichtung beschrieben, die zwar durch Verwendung von gemeinsamen Chemikalienbehältern und Wassermischbatterien eine Rationalisierung des Ablaufs in einer Gefässgruppe erzielt, die jedoch handbetätigt ist und einen ganz bestimmten Gerbgefässtyp voraussetzt. Diese Einrichtung gestattet insbesondere keinen zeitlich unabhängigen Verfahrensablauf in den einzelnen Gerbgefässen, weil nicht gleichzeitig zu zwei oder mehreren Behältern Chemikalien zuführbar sind.

In der Veröffentlichung ADVANCES IN INSTRU-MENTATION, Band 32, Teil 1, 1977, Seiten 131-133, ist andererseits eine Färbereisteuerung beschrieben, bei welcher jedes Farbgefäss eigene Zugabetanks mit einer beschränkten Anzahl Chemikalien aufweist. Die Chemikalienzugabe kann mittels einer Bedienungskonsole für jedes Färbegefäss gesteuert werden. Trotz des maschinellen grossen Aufwandes bietet diese Einrichtung keine Möglichkeiten, eine grosse Variabilität der angewendeten Chemikalien zu erzielen.

Schliesslich sind aus der Veröffentlichung REGELUNGSTECHNISCHE PRAXIS, Band 24, Nr. 6, Juni 1982, S. 187-191, sowie Band 23, Nr. 3, März 1981, S. 89-96, allgemeine Prozessleitsysteme bekannt, die im wesentlichen den eingangs erwähnten Aufbau besitzen. Diese beruhen jedoch auf dem Grundprinzip eines vollautomatischen Ablaufs, bei welchem Handeingriffe nur in Störfällen erfolgen. Sie sind als solche deshalb für die erfindungsgemässen Anwendungen nicht ausreichend.

Erfindungsgemäss stellt sich die Aufgabe, eine Prozessteuervorrichtung für eine Gerberei zu schaffen, welche mit herkömmlichen Gerbgefässen ausgerüstet ist, wobei die Bearbeitungsverfahren in den einzelnen Gefässen im wesentlichen unabhängig voneinander ablaufen, so dass in den automatisierten Verfahrensablauf jedes Gerbgefässes manuelle Eingriffe möglich sind, ohne den Gesamtablauf zu behindern, und wobei andererseits eine zentrale Chemikalienaufbereitung unter manueller Chemikaliendosierung möglich sein soll, welche zeitlich optimal auf die Verfahrensabläufe in den Gerbgefässen abgestimmt und in diese eingegliedert ist, wobei insbesondere die Chemikalienzugabe zu mehreren Gerbgefässen soll erfolgen können.

Diese Aufgabe wird dadurch gelöst, dass bei der eingangs erwähnten Prozessteuervorrichtung die gemeinsamen Aggregate eine Chemikaliendosiereinheit und die einzelnen Gerbgefässe damit verbundene Bereitstellungsbehälter für Chemikalien aufweisen, und dass mindestens die Gerbgefässe und die Chemikaliendosiereinheit je eine Schrittanzeige besitzen, wobei auf der Schrittanzeige der Chemikaliendosiereinheit ein manuell vorzunehmender Chemikaliendosierungsvorgang anzeigbar ist, so dass der entsprechende Eingriff gemäss eigener Programmabfolge ohne Beeinflussung des Verfahrensablaufs in den Gerbgefässen vornehm
bar ist, und wobei die Chemikalienzugabe in das
jeweilige Gerbgefäss automatisch durch die dem
Gerbgefäss zugeordnete Prozessteuerschaltung
über Ventile an den Bereitstellungsbehältern
steuerbar ist.

Damit ist die Chemikaliendosierung von der
Chemikalienzugabe zu den einzelnen Gefässen
getrennt.

Während die (manuelle) Dosierung gemäss
Befehlen des zentralen Rechners erfolgen kann,
erfolgt die Chemikalienzugabe in die
Gerbgefässe aus den Bereitstellungsbehältern
und ist durch die jeweiligen Prozessteuerungen
bei den Gerbgefässen gesteuert, ohne dabei die
Programmabfolge der Dosiervorgänge zu
beeinflussen. Dies ist auch deshalb von
Bedeutung, weil der Zugabevorgang sich über
eine längere Zeitspanne erstrecken kann.
Schliesslich wirken sich dadurch manuelle
Eingriffe in die Verfahrensabläufe der einzelnen
Gerbgefässe nicht störend auf den
Gesamtablauf, insbesondere auf die
Dosiervorgänge, aus.

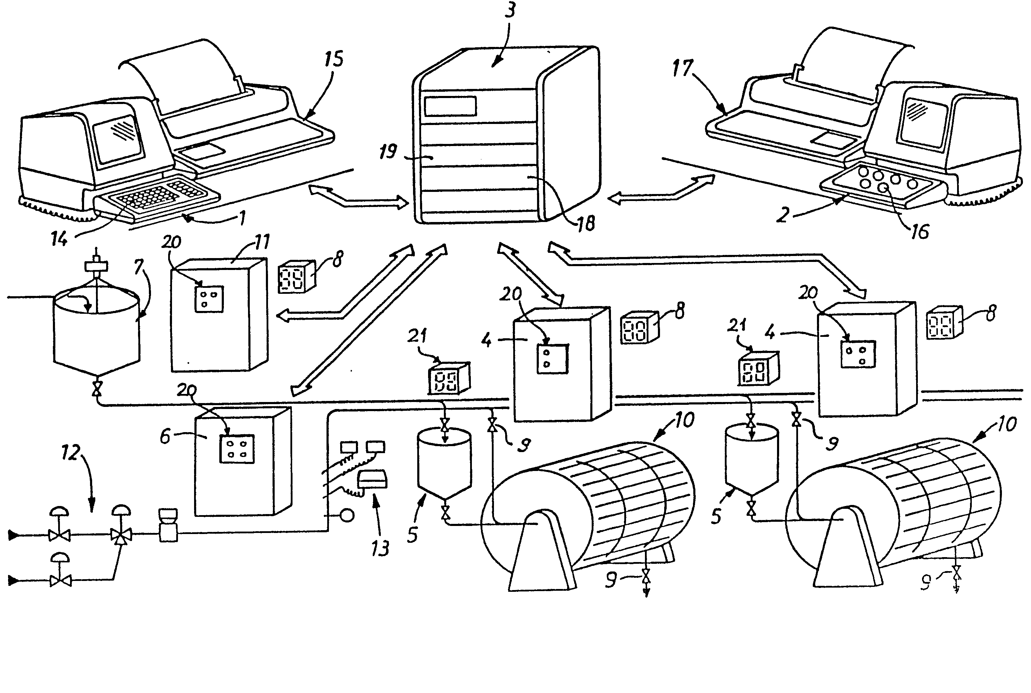

Nachfolgend wird anhand der einzigen Figur
der Aufbau der Prozessteuervorrichtung sowie
deren Funktionsweise näher erläutert.

Die Vorrichtung weist einen zentralen Rechner
3 auf, der in bekannter Weise einen 16-Bit-
Prozessor, einen Massenspeicher mit schnellem
Zugriff sowie eine Lesestation für
Permanentspeicher, wie Floppydisks, aufweist.
An den zentralen Rechner 3 ist eine zentrale
Bedienungseinheit 1 angeschlossen, die eine
alphanumerische Tastatur 14 aufweist und mit
einem Bildschirm und einem Drucker 15
verbunden ist. Ferner sind an den zentralen
Rechner 3 weitere Tastaturen 2 angeschlossen,
wobei für jede Gruppe von Gerbgefässen 10, die
zur Ausführung eines bestimmten
Verfahrensabschnittes vorgesehen sind, wie
Aeschern, Gerben oder Färben, je eine solche
Tastatur vorgesehen werden kann. Das
vereinfachte Tastenfeld 16 ist entsprechend
diesem jeweiligen Einsatzzweck ausgebildet und
besitzt Zifferntasten 0-9 sowie einige
Funktionstasten mit entsprechender
Beschriftung. Auf die Funktionsweise dieser
Elemente wird später näher eingegangen.

Anlageseitig sind an den zentralen Rechner 3
eine Mehrzahl von Prozessteuerschaltungen 18
(in der Figur schematisch dargestellt)
angeschlossen, von denen jede fest einem
bestimmten Gerbgefäss 10 zugeordnet ist. Die
Prozessteuerschaltungen 18 weisen je einen
Mikroprozessor mit entsprechenden Speichern
auf. Ferner ist eine weitere Steuerschaltung 19,
die ebenfalls als Mikroprozessor ausgebildet ist,
für die Steuerung von für mehrere Gerbgefässe
gemeinsamen Aggregaten, wie einer
Wassermisch- und Dosierbatterie 12 und einem
Chemikaliendosiersystem 7 vorgesehen. Die
Prozessteuerschaltungen 18 für die einzelnen
Gerbgefässe sowie die Steuerschaltung 19 für
die gemeinsamen Aggregate sind je mit den Steuerorganen des jeweiligen Aggregates
verbunden (Steuerventile, Schütze,
Messverstärker etc.), die ihrerseits an die
entsprechenden Ventile 9, Schieber, Pumpen,
pH-Sonden, Temperatursonden etc.
angeschlossen sind. Die Steuerorgane sind bei
den jeweiligen Aggregaten in Steuerschränken 4,
6, 11 angeordnet und weisen zusätzlich eine
direkte Hand- bzw. Notsteuerung 20 auf, mittels
welcher insbesondere bei Ausfall von
Anlageteilen und für Unterhaltsarbeiten alle
Funktionen, wie Fasslauf, Fasspositionierung etc.
von Hand betätigbar sind.

Wie bereits erwähnt, sind gewisse Aggregate
mehreren Gerbgefässen 10 zugleich zugeordnet,
so etwa eine Wassermischbatterie 6, 12, 13,
durch welche die in bestimmten
Verfahrensschritten jeweils benötigte
Wassermenge gewünschter Temperatur
innerhalb einer wählbaren Zugabezeit geliefert
wird. Sie ist in an sich bekannter Weise als
Regelkreis mit Mischteil 12 und Messteil 13
aufgebaut und bedient normalerweise 4 bis 6
Fässer.

Ebenfalls mehreren, mit der oben erwähnten
Zuordnung jedoch nicht unbedingt identischen
Gerbgefässen gemeinsam kann eine
Chemikaliendosiereinheit 7 mit einer
elektronischen Waage zugeordnet sein, die über
ein Leitungssystem mit Bereitstellungs- oder
Vorbereitungsbehältern 5 bei den einzelnen
Gefässen verbunden ist. Für grössere
Chemikalienmengen (z. B. zurückgewonnene,
wiederverwendete Flotten) kann die Dosierung
mittels induktiven Mengenmessern (in der Figur
nicht dargestellt) automatisch erfolgen. Bei
einem halbautomatischen System schliesslich
kann die Chemikaliendosiereinheit
Vorbereitungsbehälter 5 bei den einzelnen
Gefässen aufweisen, in welchen die
entsprechenden Chemikalien von Hand dosiert
werden, wobei diese automatisch im richtigen
Zeitpunkt dem Gefäss zugeben werden. Um im
Verfahrensablauf den geeigneten Zeitpunkt für
die manuelle Vorbereitung einer bestimmten
Chemikalienzugabe anzuzeigen, ist jeder
Vorbereitungsbehälter 5 mit einer Schrittanzeige
21 versehen. Der angezeigte Verfahrensschritt
kann dem ausgedruckten Rezept entnommen
werden. Je nach Ausrüstung der vorhandenen
Gerbgefässer können die genannten
Dosiereinheiten kombiniert werden.

Auch jedem Gerbgefäss 10 und jeder
Chemikaliendosiereinheit 7 ist eine
Schrittanzeige 8 zugeordnet. Die genannten
Anzeigen 8, 21 werden von der zugehörigen
Prozessteuerschaltung 18 gesteuert und zeigen
den jeweils gerade ablaufenden bzw.
vorzunehmenden Verfahrensschritt an, welcher -
wie noch näher erläutert wird - durch eine Ziffer
gekennzeichnet ist. Bei der
Chemikaliendosiereinheit 7, 11 erlaubt die
Leuchtzifferanzeige 8 eine Identifizierung der
jeweils dosierten Chemikalien, was auch die
manuelle Zudosierung von Chemikalien erlaubt.

Diese Anzeigen 8, 21 gestatten es, zusammen mit dem ausgedruckten Verfahrensprotokoll (siehe nachfolgende Ausführungen) den Ablauf der Verfahrensschritte in jedem Gefäss zu verfolgen und, falls nötig, im richtigen Zeitpunkt manuell einzugreifen.

Die zentrale Bedienungseinheit 1 dient zunächst dem Ledertechniker oder Betriebsleiter dazu, im Dialogverfahren mit dem Rechner 3 den Verfahrensablauf im Sinne eines "Rezeptes", d.h. z. B. ohne Berücksichtigung der absoluten Mengen und der effektiven Zeiten zu erstellen. Während die Mengen in prozentualen Anteilen festgelegt werden, bestehen bei den Zeiten verschiedene Möglichkeiten.

Einerseits können Basisoperationen festgelegt werden. Deren Startzeit fällt in der Regel mit der Beendigung der vorangehenden Basisoperation zusammen. Anderseits können Operationen als sogenannte Paralleloperationen gekennzeichnet werden. Diese laufen parallel zu Basisoperationen ab und betreffen etwa die Chemikaliendosierung in der Dosiereinheit 7 oder in den Vorbereitungsbehältern 5. Die Startzeit der Paralleloperationen kann verschieden ausgewählt werden, etwa auf die frühstmögliche Zeit, zu der die verwendeten Aggregate frei sind; auf einen beliebigen Zeitpunkt danach, jedoch vor der nächsten Basisoperation; auf den Beginn einer Basisoperation oder schliesslich auf eine beliebige Zeit zwischen Start und Ende einer Basisoperation.

Schliesslich kann ein Verfahrensschritt auf eine absolute Zeit nach Verfahrensbeginn festgelegt werden. Der Rechner stellt aufgrund der genannten Zeitangaben den relativen zeitlichen Ablauf des Verfahrens selbständig zusammen.

Mit diesen Zeitwahlmöglichkeiten wird der gerberei-spezifischen Notwendigkeit von parallel ablaufenden Verfahrensschritten, die den Basisoperationen überlagert sind, Rechnung getragen. Damit können insbesondere manuelle Eingriffe sinnvoll in den Verfahrensablauf eingegliedert werden.

Die erstellten Relativ-Rezepte können abgespeichert und bei Bedarf abgerufen werden.

Auf der zentralen Bedienungseinheit 1 erfolgt ferner die eigentliche Prozessvorbereitung, wobei Rezeptnummer, Partienummer (Kennzeichnung der zusammen verarbeiteten Stücke), Partiegewicht, Nummer des zu belegenden Fasses, Startzeit und andere frei wählbare Grössen eingegeben werden, woraus im Rechner 3 der Verfahrensablauf mit absoluten Mengen und Effektivzeiten als sog. Absolutrezept festgelegt wird.

Mittels dem bei der zentralen Bedienungseinheit 1 angeordneten Drucker 15 wird ein Verfahrensprotokoll ausgedruckt (einzelne Verfahrensschritte numeriert, mit effektiven Zeiten und Mengen, Sollmesswerten etc.), woraus sich die einzelnen Verfahrensschritte, die aufeinanderfolgend numeriert sind, entnehmen lassen. Ferner können Protokolle für die Chemikalienvorbereitung, für vorzunehmende Tests mit vorgeschriebenen Grenzwerten sowie ein Schlussprotokoll mit dem ausgeführten Verfahrensablauf und den dabei aufgenommenen Messwerten erstellt werden.

Mittels der Tastatur 2, welche z. B. in einem Kontrollraum bei der Gruppe der zugehörigen Gerbgefässe aufgestellt ist, kann der Prozesstart ausgelöst werden. Dadurch wird bewirkt, dass jede Prozessteuerschaltung 18 aus dem Rechner 3 ihr Rezept erhält, welches darin gespeichert wird. Vorzugsweise wird bei Prozessstart die gesamte Rezeptinformation übertragen. Ferner sind in jeder Prozessteuerschaltung individuelle Funktionsprogramme für das zugehörige Fass fest gespeichert. Dasselbe gilt für die Steuerschaltung 19 der gemeinsamen Aggregate 7, 12. Die Prozessteuerschaltungen 18 tauschen mit der Steuerschaltung 19 Steuersignale aus, wodurch die Funktionen der gemeinsamen Aggregate ausgelöst werden.

Dieser Aufbau erlaubt es, dass die Verfahren in den einzelnen Gerbgefässen nach Verfahrensbeginn weitgehend autonom ablaufen und deshalb auf Störungen des zentralen Rechners 3 sowie anderer Prozeßsteuerungen 18 unempfindlich sind. Lediglich zur Meldung von Verfahrens-Istwerten, allfälligen Störungen sowie von Handeingriffen ist in dieser Phase ein Informationsaustausch mit dem zentralen Rechner 3 erforderlich.

Die Tastatur 2 kann ein auf den speziellen Anwendungsbereich (Aescher-, Gerb- oder Färbverfahren) abgestimmtes Tastenfeld 16 aufweisen. Insbesondere besteht die Möglichkeit zum Unterbrechen des ablaufenden Verfahrensschritts für Zwischenkontrollen oder zu andenveitigen Eingriffen in den Ablauf. Je nach Messresultat wird das Verfahren normal mit entsprechender Zeitverschiebung weitergeführt, oder es können vorgesehene Korrekturoperationen ausgelöst werden. Handeingriffe dieser Art werden dabei an dem zentralen Rechner 3 gemeldet und im Schlussprotokoll mit Startzeit, beeinflusster Funktion sowie Endzeit vermerkt.

Dabei hat die Bedienungsperson durch die Ausbildung des Tastenfeldes 16 lediglich beschränkte Befugnisse und kann das Rezept darüberhinaus nicht beeinflussen. Das erlaubt einen einfachen, Aufbau des Tastenfeldes 16 und eine Bedienung ohne spezielle Programmierkenntnisse.

Bei jedem Tastenfeld 16 ist ferner ein Bildschirm sowie ein Drucker 17 angeordnet, wodurch eine Bedienung im Dialog möglich wird, wobei die Bedienungsperson lediglich die gestellten Fragen zu beantworten hat. Dies erleichtert die Bedienung weiter.

Ferner lässt sich der Verfahrensstand in jedem zugeordneten Fass abfragen, womit die Bedienungsperson sich jederzeit einen Ueberblick über den Gesamtablauf gewinnen kann, sowie ein Protokoll über alle ausgeführten automatischen und manuellen Verfahrensschritte ausdrucken.

Als weiteres Mittel zum Feststellen des aktuellen Verfahrensstandes vor Ort sind die erwähnten Leuchtzifferanzeigen 8, 21 bei den einzelnen Fässern 10 bzw. bei der Chemikaliendosiereinheit 7 und den Vorbereitungsbehältern vorgesehen. Die den einzelnen Verfahrensschritten im Rezept zugeordneten, laufenden Nummern werden jeweils bei Ausführung des entsprechenden Schrittes angezeigt. Ist dabei in einer halbautomatisch aufgebauten Anlage ein manueller Eingriff vorzunehmen, so wird dies durch Blinken der entsprechenden Leuchtziffer angezeigt.

Die beschriebene Prozessteuervorrichtung ist mit bestehenden Gerbereieinrichtungen verwendbar, die oft unterschiedliche Gerbgefässtypen mit verschiedenen Ausrüstungen aufweisen, indem mittels der individuellen Prozessteuerschaltungen 18 diesen Unterschieden Rechnung getragen werden kann. Ferner ist sie leicht anpassbar bei der Installation von weiteren, andersartigen Gemässen oder bei der Ersetzung von Gerbgefässen.

Die Schrittanzeige bei jedem Fass erlaubt das Zusammenwirken der automatischen Abläufe mit lokalen, manuell auszuführenden Operationen. Die Direktsteuerung schliesslich ermöglicht direkte Eingriffe, unabhängig vom Verfahrensiezept. Diese werden an den Bildschirmen angezeigt und auch im Schlussprotokoll vermerkt.

**Patentansprüche**

1. Prozessteuervorrichtung mit mindestens einer Gruppe von parallel zueinander betreibbaren Gerbgefässen (10), von denen mindestens ein Teil an gemeinsame Aggregate (7, 12) angeschlossen sind, mit einem zentralen Rechner (3) und einer zentralen Ein- und Ausgabeeinheit (14, 15), wobei der Rechner mit mehreren Prozessteuerschaltungen (18) verbunden ist, von denen jede einem Gerbgefäss (10) bzw. einem gemeinsamen Aggregat (7, 12) zugeordnet ist und wobei ferner jedes Gerbgefäss (10) bzw. jedes der gemeinsamen Aggregate (7, 12) von der zugehörigen Prozessteuerschaltung beeinflussbare, lokale Steuerorgane (4, 6, 11) zur Betätigung der jeweiligen Funktionen besitzt und für jede Gefässgruppe eine gemeinsame Eingabeeinheit (17) zur Beeinflussung des Verfahrensablaufs in jedem Gerbgefäss vorgesehen ist, dadurch gekennzeichnet, dass die gemeinsamen Aggregate eine Chemikaliendosiereinheit (7) und die einzelnen Gerbgefässe (10) damit verbundene Bereitstellungsbehälter (5) für Chemikalien aufweisen, und dass davon mindestens die Gerbgefässe (10) und die Chemikaliendosiereinheit (7) je eine Schrittanzeige (8) besitzen, wobei auf der Schrittanzeige (8) der Chemikaliendosiereinheit (7) ein manuell vorzunehmender Chemikaliendosierungsvorgang anzeigbar ist, so dass der entsprechende Eingriff gemäss eigener Programmabfolge ohne Beeinflussung des Verfahrensablaufs in den Gerbgefässen (10) vornehmbar ist, und wobei die Chemikalienzugabe in das jeweilice Gerbgefäss (10) automatisch durch die dem Gerbgefäss (10) zugeordnete Prozessteuerschaltung (18) über Ventile an den Bereitstellungsbehältern (5) steuerbar ist.

2. Prozessteuervorrichtung nach Anspruch 1, dadurch gekennzeichnet, dass der zentrale Rechner (3) an eine zentrale Bedienungseinheit zur Festlegung des in jedem Gerbgefäss (10) auszuführenden Verfahrensablaufs angeschlossen ist und dass jede gemeinsame Eingabeeinheit (17) eine räumlich von der zentralen Bedienungseinheit trennbare Tastatur (2) zur Beeinflussung einer beschränkten Anzahl vorbestimmter Funktionen für jedes Gefäss (10), insbesondere für einen Unterbruch des Verfahrensablaufs, aufweist.

3. Prozessteuervorrichtung nach Anspruch 2, wobei für Aescher-, Gerb- und Färbverfahren je eine Gruppe von Gerbgefässen (10) vorgesehen ist, dadurch gekennzeichnet, dass jeder dieser Gruppen eine eigene Tastatur (2) zugeordnet ist.

4. Prozessteuervorrichtung nach einem der Ansprüche 2 und 3, dadurch gekennzeichnet, dass die Bedienungseinheit (1) sowie jede Tastatur (2) eine Bildschirmanzeige aufweist.

5. Prozessteuervorrichtung nach einem der Ansprüche 2 bis 4, dadurch gekennzeichnet, dass die zentrale Bedienungseinheit (1) sowie mindestens ein Teil der Tastaturen (2) je an einen Drucker (15, 17) angeschlossen sind.

6. Prozessteuervorrichtung nach einem der vorangehenden Ansprüche, dadurch gekennzeichnet, dass die gemeinsamen Aggregate ferner eine Wassermischbatterie (12) aufweisen.

7. Prozessteuervorrichtung nach Anspruch 6, dadurch gekennzeichnet, dass die Chemikalierndosiereinheit (7) eine elektronische Waage aufweist

8. Prozessteuervorrichtung nach einem der vorangehenden Ansprüche, dadurch gekennzeichnet, dass jeder Bereitstellungsbehälter (5) eine Schrittanzeige (21) aufweist, auf welcher ein jeweils vorzunehmende Dosierverfahrensschritt im gegebenen Zeitpunkt anzeigbar ist.

**Claims**

1. Process controller for tanning with at least one group of tanning drums (10) operable parallel to each other, at least a part of said drums being connected to a set of devices (7, 12) common to them, with a central processor (3) and an input/output unit (14, 15), wherein said central processor is connected with a plurality of process

control circuits (18), each of which being associated to a tanning drum (10) or to one of said common devices (7, 12) and wherein each tanning drum (10) or each of said common devices (7, 12) comprises local control elements (4, 6, 11) for activating respective operations and each group of tanning drums (10) is provided with a common input unit (17) for influencing the process in each tanning drum, characterized in that said common devices include a dosage unit (7) for chemicals and each tanning drum has a preparation container (5) for chemicals connected therewith, and in that at least the tanning drums (10) and the dosage unit (7) each comprises a step display (8), wherein the step display (8) of the dosage unit (7) for chemicals is suited to indicate a manual dosage step for chemicals such that the respective operation can be done according to an own program without influencing the process within the tanning drums (10) and wherein the supply of chemicals into the respective tanning drum (10) is automatically controllable by valves at the preparation containers (5) by means of the process control circuit (18) associated with the tanning drum (10).

2. Process controller according to claim 1, characterized in that the central processor (3) is connected to a central operation unit for determining the process to be carried out in each tanning drum (10) and in that each common input unit (17) comprises a keyboard (2) separable in space from the central operation unit for influencing a limited number of predetermined operations for each drum (10), especially for stopping the process.

3. Process controller according to claim 2, wherein each for the lime-, tanning- and dyeing process a group of tanning drums (10) is provided, characterized in that each of said groups comprises an own keyboard (2).

4. Process controller according to on of the claims 2 and 3, characterized in that the operation unit (1) as well as each keyboard (2) comprises a projection screen display.

5. Process controller according to one of the claims 2 to 4 characterized in that the central operation unit (1) as well as at least a part of the keyboards (2) are connected to a printer (15, 17).

6. Process controller according to one of the preceding claims, characterized in that the common set of devices further include a water mixing installation (12).

7. Process controller according to claim 6, characterized in that the dosage unit (7) for chemicals comprises an electronic balance.

8. Process controller according to one of the preceding claims, characterized in that each preparation container (5) comprises a step display (21), on which a dosage step to be carried out is displayed at the respective time.

**Revendications**

1. Dispositif de commande d'opérations ou de phases de traitement adjoint à au moins un groupe de fûts ou de cuves de tannage (10) pouvant être commandés de façon à fonctionner en parallèle entre eux, dont une partie au moins sont reliés à des groupes communs (7, 12), dispositif de commande qui comporte une calculatrice centrale (3) et une unité d'entrée et de sortie centrale (14, 15), la calculatrice étant reliée à plusieurs montages de commande d'opérations ou de phases de traitement (18) dont chacun corresponà à un fût ou à une cuve de tannage (10) et à un groupe commun (7, 12), chacun des fûts ou des cuves de tannage (10) et chacun des groupes communs (7, 12), étant en outre munis à organes de commande locaux (4, 6, 11), pouvant être influencés par le montage de commande à opérations ou de phases de traitement correspondant, pour la commande des différentes fonctions, et une unité d'entrée commune (17) étant prévue pour chaque groupe de fûts ou de cuves de tannage pour influencer le déroulement du processus de traitement dans chaque fût ou dans chaque cuve de tannage, le dispositif de commande étant caractérisé en ce que les groupes communs comportent une unité de dosage des produits chimiques (7) et les différents fûts ou les différentes cuves de tannage (10), des récipients de préparation de produits chimiques (5) reliés à l'unité de dosage, et en ce qu'au moins les fûts ou les cuves de tannage (10) et l'unité de dosage de produits chimiques (7) sont munis chacun à'un affichage d'opérations ou de phases de traitement (8), une opération de dosage de produits chimiques à effectuer à la main pouvant être indiquée par l'affichage d'opérations ou de phases de traitement (8) de l'unité de dosage des produits chimiques (7), de telle sorte que l'intervention en question pourra avoir lieu selon un déroulement de programme qui lui est propre sans influencer le déroulement de la marche du traitement dans les fûts ou dans les cuves de tannage (10), et l'apport des produits chimiques au fût ou à la cuve de tannage particuliére (10) pouvant être commandé automatiquement par le montage de commande d'opérations ou de phases de traitement (18) adjoint au fût ou à la cuve de tannage (10), à l'intervention de valves prévues aux récipients de préparation (5).

2. Dispositif de commande d'opérations ou de phases de traitement suivant la revendication 1, caractérisé en ce que la calculatrice centrale (3) est reliée à une unité de commande centrale prévue pour la détermination du déroulement du processus de traitement devant avoir lieu dans chaque fût ou dans chaque cuve de tannage (10) et en ce que chaque unité d'entrée commune (17) comporte un clavier (2) pouvant être séparé dans l'espace de l'unité de commande centrale, clavier devant permettre d'exercer une influence sur un nombre limité de commandes déterminées au préalable pour chaque fût ou pour chaque cuve (10), en particulier pour une interruption du déroulement du processus de traitement.

3. Dispositif de commande d'opérations ou de phases de traitement suivant la revendication 2, un groupe de fûts ou de cuves (10) étant prévu pour chacun des procédés de traitement au pelain, de tannage au tan, de mégisserie et de teinture, caractérisé en ce qu'un clavier propre (2) correspond à chacun de ces groupes.

4. Dispositif de commande d'opérations ou de phases de traitement suivant l'une ou l'autre des revendications 2 et 3, caractérisé en ce que l'unité de commande (1) et chaque clavier (2) sont munis d'un affichage par écran d'image.

5. Dispositif de commande d'opérations ou de phases de traitement suivant l'une quelconque des revendications 2 à 4, caractérisé en ce que l'unité de commande centrale (1), ainsi qu'au moins une partie des claviers (2) sont reliés chacun à une imprimante (15, 17).

6. Dispositif de commande d'opérations ou de phases de traitement suivant l'une quelconque des revendications précédentes, caractérisé en ce que les groupes communs comportent en outre une batterie de mélange d'eau (12).

7. Dispositif de commande d'opérations ou de phases de traitement suivant la revendication 6, caractérisé en ce que l'unité de dosage de produits chimiques (7) est munie d'une balance électronique.

8. Dispositif de commande d'opérations ou de phases de traitement suivant l'une quelconque des revendications précédentes, caractérisé en ce que chaque récipient de préparation (5) est muni d'un affichage d'opérations (21), par lequel une opération du procédé de dosage particulière à effectuer à un moment donné peut être indiquée.